# EUROPÄISCHE PATENTANMELDUNG

(11) **EP 3 483 428 A1**
(43) Veröffentlichungstag der Anmeldung: **15.05.2019**
(21) Anmeldenummer: 17200529.0
(22) Anmeldetag: 08.11.2017
(51) Int. Cl.: F03D 13/20, F03D 80/80, F03D 1/06

(54) **MITTEL ZUR ERHÖHUNG DER BIEGESTEIFIGKEIT VON TRAGENDEN KOMPONENTEN EINER WINDENERGIEANLAGE**

(71) Anmelder: Nordex Energy GmbH, 22419 Hamburg (DE)
(72) Erfinder: Rieck, Steffen, 19067 Leezen OT Rampe (DE); Wrage, Marcel, 23970 Wismar (DE); Dahnke, Arno, 18059 Rostock (DE)
(74) Vertreter: Garrels, Sabine

(57) **Zusammenfassung**

Die vorliegende Erfindung betrifft Mittel zur Erhöhung der Biegesteifigkeit von tragenden Komponenten, insbesondere aus metallischen Werkstoffen, einer Windenergieanlage.

Aufgabe der Erfindung ist es, primär eine Erhöhung der Biegesteifigkeit von tragenden Komponenten einer Windenergieanlage aus metallischen Werkstoffen und eine Reduzierung von Bauteilbewegungen zu erreichen.

Die erfindungsgemäße Lösung sind Spannelemente, welche die tragenden Komponenten aus metallischen Werkstoffen verstärken. Die tragenden Komponenten sind sowohl eine Tragstruktur, umfassend einen Maschinenträger, welcher mit einem Turm der Windenergieanlage in Verbindung steht, und einen Generatorträger, wobei Maschinenträger und Generatorträger über Verbindungsmittel miteinander verbunden sind, als auch eine Rotornabe, umfassend einen Wellenflansch, welcher mit einer Rotorwelle in Verbindung steht, und drei Blattflansche, die mit Rotorblättern verbunden sind. Die Spannelemente werden erfindungsgemäß innerhalb und/oder außerhalb der tragenden Komponenten angeordnet.

## Beschreibung

Die vorliegende Erfindung betrifft Mittel zur Erhöhung der Biegesteifigkeit von tragenden Komponenten, insbesondere aus metallischen Werkstoffen, einer Windenergieanlage.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt.

Die Gondel einer Windenergieanlage umfasst eine Tragstruktur sowie eine nichttragende Gondelverkleidung mit einem Tragwerk, bestehend aus Streben und Profilen. Im Innern der Gondel sind auf der Tragstruktur verschiedene Anlagenkomponenten angeordnet.

Die Tragstruktur umfasst üblicherweise einen Maschinenträger aus Guss und einen Generatorträger als Schweißkonstruktion. Die Gondelverkleidung schützt die Anlagen im Inneren der Gondel gegen äußere Umwelteinflüsse. Für Windenergieanlagen und deren Einsatzbedingungen ist die Stabilität der Gondel von besonderer Bedeutung. Insbesondere betrifft die Erfindung Mittel zur Erhöhung der Biegesteifigkeit der Tragstruktur der Gondel, mit dem Generatorträger und dem Maschinenträger, und der Rotornabe.

In einer Windenergieanlage wird der hintere Teil des Maschinenhauses (hinter der Turmachse), welcher durch den Maschinenträger und den Generatorträger einen Kragarm bildet, stark vertikal belastet. Maschinenträger und Generatorträger erfahren dadurch hohe Biegebeanspruchungen. Daher ist es sinnvoll, diese Bereiche zu verstärken.

Eine Verstärkung von nicht ausreichend zugfesten Strukturen oder deren Teilbereichen kann beispielsweise durch Spannelemente erfolgen und wird in anderen Bereichen der Industrie seit längerer Zeit angewandt.

Die einzelnen Komponenten, wie z.B. Spanndrähte, Klemmen oder Spannvorrichtungen sind für diesen Anwendungsfall in großer Vielfalt und ausgereifter Konstruktion auf dem Markt verfügbar.

Das Hauptanwendungsgebiet liegt im Bauwesen (Spannbeton). Hier werden vorrangig Betondecken, Türme oder Brücken durch das Einbringen von vorgespannten Stahlelementen verstärkt.

EP 2905464 A1 betrifft eine Wurzelendvorrichtung für ein Rotorblatt einer Windenergieanlage. Die Wurzelendvorrichtung umfasst ein Wurzelendelement aus Beton, welches dem Übertragen einer Kompressionskraft zwischen der Nabe und dem Rotorblatt dient. An dem Wurzelendelement ist zwischen Nabe und Rotorblatt mindestens ein Zugelement angeordnet, welches mit der Nabe der Windturbine und mit dem Rotorblatt zum Übertragen einer Spannkraft verbindbar ist.

In DE 102014208934 B4 dagegen wird eine Lagerstruktur zur Lagerung von Windturbinenkomponenten offenbart, welche sich innerhalb eines Windturbinenmaschinenhauses befindet. Die Lagerstruktur umfasst wenigstens zwei Trägerprofilstrukturen, welche über eine Querverbindungsstruktur miteinander verbunden sind und wenigstens zwei Verbindungsstreben umfassen, welche sich in einem Kreuzungsbereich kreuzen.

### Darstellung der Erfindung

Aufgabe der Erfindung ist es, primär eine Erhöhung der Biegesteifigkeit von tragenden Komponenten einer Windenergieanlage aus metallischen Werkstoffen und eine Reduzierung von Bauteilbewegungen zu erreichen.

Die erfindungsgemäße Lösung der Aufgabe sind Spannelemente, welche die tragenden Komponenten aus metallischen Werkstoffen verstärken. Die tragenden Komponenten sind sowohl eine Tragstruktur, umfassend einen Maschinenträger, welcher mit einem Turm der Windenergieanlage in Verbindung steht, und einen Generatorträger, wobei Maschinenträger und Generatorträger über Verbindungsmittel miteinander verbunden sind, als auch eine Rotornabe, umfassend einen Wellenflansch, welcher mit einer Rotorwelle in Verbindung steht, und drei Blattflansche, die mit Rotorblättern verbunden sind. Die Spannelemente werden erfindungsgemäß innerhalb und/oder außerhalb der tragenden Komponenten angeordnet.

Ein erfinderisches Mittel zur Erhöhung der Biegesteifigkeit von tragenden Komponenten einer Windenergieanlage ist wenigstens ein Spannelement mit jeweils einem ersten freien Ende und einem zweiten freien Ende, welches zwischen zwei Befestigungspunkten in Längsrichtung an oder auf Endpunkten innerhalb und/oder außerhalb einer Tragstruktur der tragenden Komponenten lösbar befestigt ist. Die Tragstruktur umfasst einen Maschinenträger, welcher mit einem Turm der Windenergieanlage in Verbindung steht, und einen Generatorträger, wobei Maschinenträger und Generatorträger über Verbindungsmittel miteinander verbunden sind.

Für eine erste Ausführungsform werden die Spannelemente über Stützen, welche senkrecht oder geneigt auf der Tragstruktur angeordnet sind, geführt und eine weitere Ausführungsform zeigt, dass die Spannelemente in Längsrichtung parallel zu seitlichen Längsträgern der Tragstruktur verlaufen.

Für eine weitere Ausführungsform sind wenigstens zwei Spannelemente mit dem ersten freien Ende an wenigstens zwei, einander gegenüber liegenden Befestigungspunkten, welche an äußeren Endpunkten der Tragstruktur angeordnet sind, befestigt und mit dem zweiten freien Ende an einem gegenüber liegenden äußeren Ende des Generatorträgers an einem äußeren, mittig angeordneten Befestigungspunkt befestigt.

Für eine weitere Ausführungsform sind wenigstens zwei Spannelemente mit ihrem ersten freien Ende und ihrem zweiten freien Ende an wenigstens zwei, einander gegenüber liegenden Befestigungspunkten, welche an äußeren Endpunkten der Tragstruktur angeordnet, befestigt und kreuzen sich.

Ein weiteres erfinderisches Mittel zur Erhöhung der Biegesteifigkeit von tragenden Komponenten einer Windenergieanlage sind wenigstens zwei Spannelemente, die innerhalb oder außerhalb einer Rotornabe zwischen einem Blattflansch und einer gegenüberliegenden Seite der Rotornabe geführt werden. Die tragenden Komponenten umfassen eine Rotornabe, einen Wellenflansch, welcher mit einer Rotorwelle in Verbindung steht, und drei Blattflansche, die mit Rotorblättern verbunden sind. Die Befestigungspunkte für die Spannelemente sind an den oder nahe bei den Blattflanschen und/oder der Rotornabe und/oder dem Wellenflansch angeordnet.

Für eine weitere Ausführungsform sind die Spannelemente innerhalb der Rotornabe so angeordnet, dass sie einen Kreuzungspunkt aufweisen, parallel oder divergent zueinander verlaufen.

Für eine weitere Ausführungsform sind die Spannelemente außenliegend über dem Umfang der Rotornabe zwischen den Blattflanschen und dem Wellenflansch angeordnet.

Die Spannelemente sind mit ihren jeweiligen freien Enden über lösbare Verbindungsmittel an den Befestigungspunkten der Tragstruktur oder der Rotornabe befestigt.

Eine erfindungsgemäße Windenergieanlage besteht aus einem Turm und einer um die Längsachse des Turms drehbar auf dem Turmkopf gelagerten Gondel, welche einen Rotor mit einer Rotornabe sowie eine Tragstruktur umfasst, wobei die Tragstruktur und/oder die Rotornabe die erfindungsgemäßen Mittel zur Erhöhung der Biegesteifigkeit von tragenden Komponenten einer Windenergieanlage gemäß einem der vorhergehenden Ausführungsformen enthält.

Eine Verstärkung bzw. Vorspannung der Biegezone durch Spannelemente kann die Biegesteifigkeit dieser Bauteile und damit die Belastbarkeit erhöhen. Bauteile wie die Rotornabe werden teilweise über die Verformung dimensioniert. Hier kann durch innere oder äußere Spannelemente eine Reduzierung der Verformung erreicht werden, was zu einer Materialersparnis führt.

Durch die gezielt einstellbare Vorspannung besteht zudem potentiell die Möglichkeit, die Tragstruktur gezielt in ihrer Eigenfrequenz zu beeinflussen und so eine Verbesserung der Dauerfestigkeit zu erreichen, was zu einer Materialeinsparung oder erweiterten konstruktiven Möglichkeiten führen kann.

Bei geeigneter konstruktiver Ausführung können die Verbindungen zwischen den Hauptkomponenten, wie z.B. Maschinen- und Generatorträger, oder innerhalb der Komponenten optimiert werden.

Bei einer asymmetrischen Belastung kann durch eine individuell angepasste Vorspannung der einzelnen Spannelemente ein Ausgleich hergestellt werden.

### Ausführung der Erfindung

Die Erfindung wird anhand von Beispielen erläutert. Hierzu zeigen
- Figur 1a bis 1c: Varianten der Spannelement-Führung an Maschinen- und Generatorträger in Seitenansichten,
- Figur 2a und b: Varianten der Spannelement-Führung an Maschinen- und Generatorträger in Draufsichten,
- Figur 3: eine Spannelement-Führung innerhalb einer Rotornabe und
- Figur 4: eine Spannelement-Führung über den Umfang einer Rotornabe.

Tragende Komponenten im Sinne der Erfindung sind die Rotornabe RN und die Tragstrukturen TS. Auf der Zugseite der Tragstrukturen TS oder der Rotornabe RN werden Mittel zur Erhöhung der Biegesteifigkeit, insbesondere Spannelemente 1, angeordnet. Die Spannelemente 1 werden an ihrem vorderen und hinteren freien Ende 101, 102 mit je einem Verbindungselement, welches jeweils einen Befestigungspunkt 2 (auch Fixpunkt) darstellt, über lösbare Verbindungsmittel an der Tragstruktur TS oder der Rotornabe RS befestigt. Die Verbindungsmittel sind beispielsweise als lösbare Schraubverbindung ausgeführt. An einem Befestigungspunkt 2 wird das Spannelement 1 durch ein Werkzeug auf einen definierten Wert vorgespannt. Durch das Vorspannen erfolgt eine Verschiebung des Zug- Druckbereiches innerhalb oder außerhalb der tragenden Komponenten. Die Vorspannung kann in Zeitabständen kontrolliert und ggf. nachgestellt werden. Für die Spannelemente 1 und Spannwerkzeuge können Mittel genutzt werden, die im Bauwesen zum Einsatz kommen, wie beispielsweise Spanndrähte, Litzen oder sonstige Zugelemente.

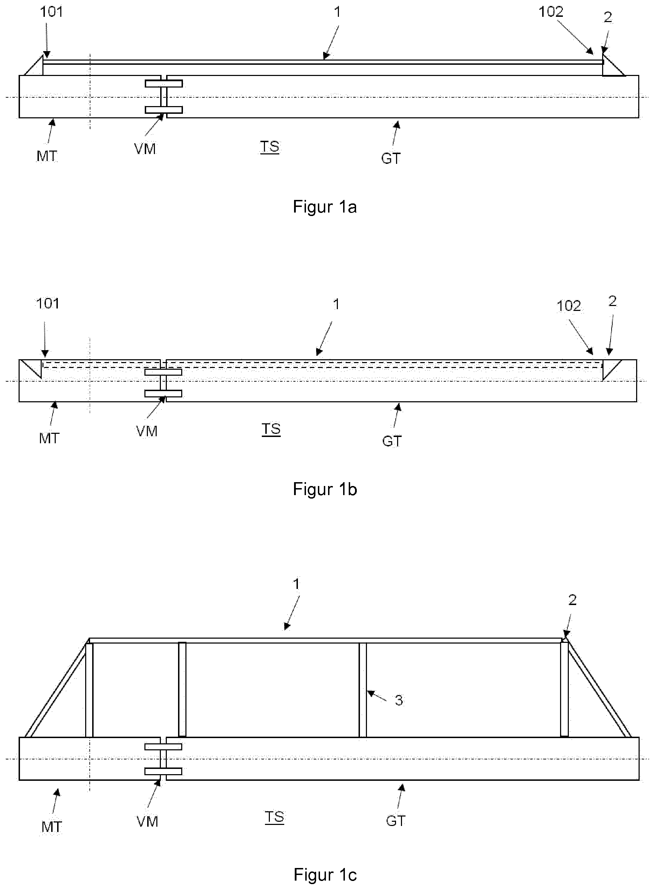

Die Figuren 1a bis 1c zeigen verschiedene Varianten der Spannelemente-Führung für eine Tragstruktur TS, welche aus einem Maschinenträger MT und einem Generatorträger GT besteht. Der Generatorträger GT besteht aus einem oder mehreren längs verlaufenden Tragelementen, in diesem Ausführungsbeispiel aus zwei außen liegenden Längsträgern, welche über eine schubsteife Struktur miteinander verbunden sind. Je nach Anforderung müssen die Längsträger entsprechend ausgestaltet sein, damit sie das nötige Widerstandsmoment besitzen. Maschinenträger MT und Generatorträger GT sind in üblicher Weise über Verbindungsmittel VM miteinander verbunden.

Figur 1a zeigt die Tragstruktur TS mit einem außen an der Tragstruktur TS angebrachten Spannelement 1. Dazu sind außen an der Tragstruktur TS Befestigungspunkte 2 vorgesehen, an welchen die Spannelemente 1 befestigt werden. Die Befestigungspunkte 2 befinden sich an oder auf den äußeren Endpunkten der Tragstruktur TS. In der Figur 1a ist lediglich ein Spannelement 1 zu sehen, welches eine Ausführungsform sein kann. Es ist allerdings sinnvoll mehr als ein Spannelement 1 vorzusehen, beispielsweise zwei Spannelemente 2 auf der nach oben gerichteten Seite der Tragstruktur TS. In Figur 1b sind die Spannelemente 1 in der Tragstruktur TS innenliegend angeordnet. Dafür befinden sich die Befestigungspunkte 2 in oder nahe der inneren Enden der Tragstruktur TS. An den Befestigungspunkten 2 sind Verbindungselemente, beispielsweise Spannwerkzeuge usw., vorgesehen, um die Spannelemente sicher zu befestigen. Durch die in den Figuren 1a und 1b gezeigten Ausführungsbeispiele werden Maschinenträger MT und Generatorträger GT direkt abgespannt, so dass eine zusätzliche Lastaufnahme erfolgen kann. Figur 1c zeigt hingegen, dass das Spannelement 1 oder die Spannelemente 1 über Stützen 3 geführt werden. Die Stützen 3 können senkrecht angeordnet sein, aber auch geneigte Ausführungen sind möglich. Dabei ist es sinnvoll, dass der Generatorträger GT mit mindestens einer oder mehreren - im gezeigten Beispiel sind drei Stützen 3 zu sehen - und der Maschinenträger MT mit mindestens einer Stütze 3 versehen ist.

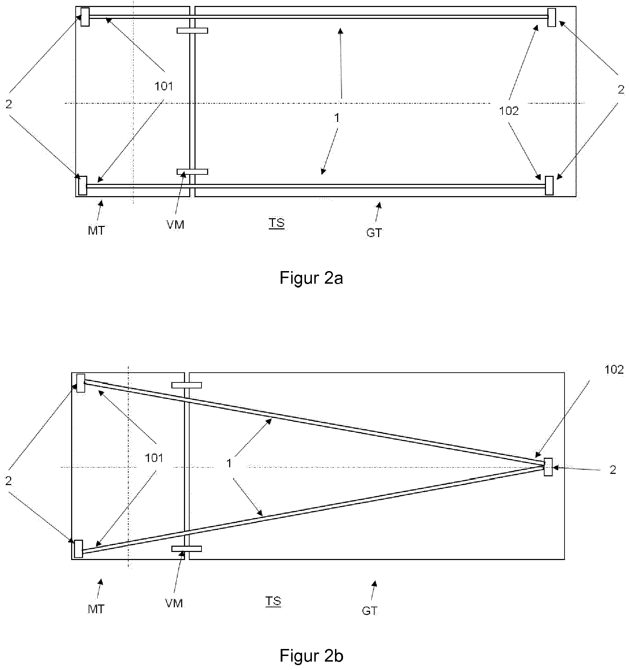

Aus den Figuren 2a und 2b sind weitere Varianten der Spannelement-Führung an der Tragstruktur TS in Draufsichten zu sehen. In Figur 2a sind als ein Ausführungsbeispiel zwei Spannelemente 1 in Längsrichtung der Tragstruktur TS zu sehen. Die Befestigungspunkte 2 befinden sich an, in oder auf den äußeren Endpunkten der Tragstruktur. Figur 2b zeigt ebenfalls zwei Spannelemente 1, welche von jeweils einem Befestigungspunkt 2 an, in oder auf den äußeren Endpunkten des Maschinenträgers MT ausgehen und zu einem äußeren Befestigungspunkt 2 an, in oder auf dem äußeren Ende des Generatorträgers GT mittig zusammenlaufen. Andere Anordnungen sind ebenfalls möglich, beispielsweise eine Kombination aus den Anordnungen der Figuren 2a und 2b mit gekreuzten Spannelementen 1.

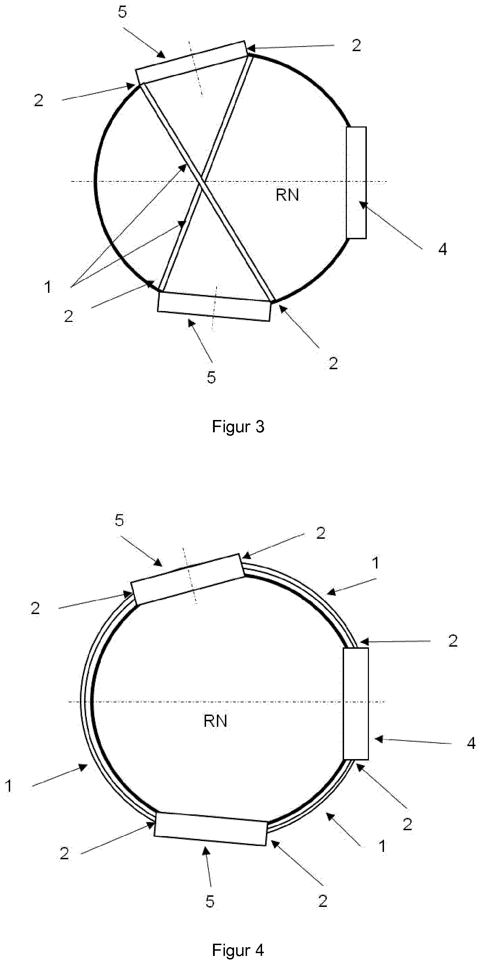

In Figur 3 ist eine Spannelement-Führung innerhalb einer Rotornabe RN dargestellt. Die Rotornabe RN hat einen Wellenflansch 4, welcher mit der Rotorwelle in Verbindung steht, und drei Blattflansche 5, die mit den Rotorblättern verbunden sind. Die Spannelemente 1 werden innerhalb der Rotornabe RN zwischen einem Blattflansch 5 und der gegenüberliegenden Seite der Rotornabe RN geführt und haben ihre Befestigungspunkte 2 an den oder nahe bei den Blattflanschen 5. Es werden zwei und mehr Spannelemente 1 so geführt, dass sie einen Kreuzungspunkt aufweisen oder parallel zueinander verlaufen. Die Spannelemente 1 können ggf. auch divergent verlaufen.

Ein weiteres Ausführungsbeispiel einer Spannelement-Führung wird in Figur 4 gezeigt, welche über den Umfang einer Rotornabe RN angeordnet ist. Die Spannelemente 1 sind auf der Rotornabe RN außenliegend zwischen den Blattflanschen 5 und dem Wellenflansch 4 geführt. Die Befestigungspunkte 2 liegen an den oder nahe bei den Blattflanschen 5 bzw. dem Wellenflansch 4.

Da es sich bei den vorhergehenden, detailliert beschriebenen Mitteln zur Erhöhung der Biegesteifigkeit von tragenden Komponenten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Anordnungen der Spannelemente 1 in anderer Form als in der hier beschriebenen folgen. Weiter schließt die Verwendung der unbestimmten Artikel "ein" bzw. "eine" nicht aus, dass die betreffenden Merkmale auch mehrfach vorhanden sein können.

### Bezugszeichen

- RN: Rotornabe
- TS: Tragstrukturen
- MT: Maschinenträger
- GT: Generatorträger
- VM: Verbindungsmittel

- 1: Spannelemente
- 101: vorderes freies Ende der Spannelemente 1
- 102: hinteres freies Ende der Spannelemente 1
- 2: Befestigungspunkt
- 3: Stützen
- 4: Wellenflansch
- 5: Blattflansch

## Patentansprüche

1. Mittel zur Erhöhung der Biegesteifigkeit von tragenden Komponenten einer Windenergieanlage, wobei die tragenden Komponenten eine Tragstruktur (TS) aufweisen, die einen Maschinenträger (MT), welcher mit einem Turm der Windenergieanlage in Verbindung steht, und einen Generatorträger (GT) umfassen, wobei Maschinenträger (MT) und Generatorträger (GT) miteinander verbunden sind, wobei wenigstens ein Spannelement (1) mit jeweils einem ersten freien Ende (101) und einem zweiten freien Ende (102) zwischen zwei Befestigungspunkten (2) in Längsrichtung an oder auf Endpunkten der Tragstruktur (TS), innerhalb und/oder außerhalb der Tragstruktur (TS), lösbar befestigt ist.

2. Mittel zur Erhöhung der Biegesteifigkeit nach Anspruch 1 **dadurch**
**gekennzeichnet, dass**
die Spannelemente (1) über Stützen (3), welche senkrecht oder geneigt auf der Tragstruktur (TS) angeordnet sind, geführt werden.

3. Mittel zur Erhöhung der Biegesteifigkeit nach Anspruch 1 **dadurch**
**gekennzeichnet, dass**
die Spannelemente (1) in Längsrichtung parallel zu seitlichen Längsträgern der Tragstruktur (TS) verlaufen.

4. Mittel zur Erhöhung der Biegesteifigkeit nach Anspruch 1 **dadurch**
**gekennzeichnet, dass**
wenigstens zwei Spannelemente (1) mit dem ersten freien Ende (101) an wenigstens zwei, einander gegenüber liegenden Befestigungspunkten (2), welche an äußeren Endpunkten der Tragstruktur (TS) angeordnet sind, befestigt sind und mit dem zweiten freien Ende (102) an einem gegenüber liegenden äußeren Ende des Generatorträgers (GT) an einem äußeren, mittig angeordneten Befestigungspunkt (2) befestigt sind.

5. Mittel zur Erhöhung der Biegesteifigkeit nach Anspruch 1 **dadurch**
**gekennzeichnet, dass**
wenigstens zwei Spannelemente (1) mit ihrem ersten freien Ende (101) und ihrem zweiten freien Ende (102) an wenigstens zwei, einander gegenüber liegenden Befestigungspunkten (2), welche an äußeren Endpunkten der Tragstruktur (TS) angeordnet sind, befestigt sind und sich kreuzen.

6. Mittel zur Erhöhung der Biegesteifigkeit von tragenden Komponenten einer Windenergieanlage, wobei die tragenden Komponenten eine Rotornabe (RN) mit einem Wellenflansch (4), welcher mit einem Maschinenträger (MT) in Verbindung steht, und mit drei Blattflanschen (5), die mit Rotorblättern verbunden sind, umfassen,
wobei wenigstens zwei Spannelemente (1) innerhalb oder außerhalb der Rotornabe (RN) zwischen einem Blattflansch (5) und einer gegenüberliegenden Seite der Rotornabe (RN) geführt werden und ihre Befestigungspunkte (2) an den oder nahe bei den Blattflanschen (5) und/oder dem Wellenflansch (4) angeordnet sind.

7. Mittel zur Erhöhung der Biegesteifigkeit nach Anspruch 6 **dadurch**
**gekennzeichnet, dass**
die Spannelemente (1) innerhalb der Rotornabe (RN) so angeordnet sind, dass sie einen Kreuzungspunkt aufweisen, parallel oder divergent zueinander verlaufen.

8. Mittel zur Erhöhung der Biegesteifigkeit nach Anspruch 6 **dadurch**
**gekennzeichnet, dass**
die Spannelemente (1) außenliegend über dem Umfang der Rotornabe (RN) zwischen den Blattflanschen (5) und dem Wellenflansch (4) angeordnet sind.

9. Mittel zur Erhöhung der Biegesteifigkeit an tragenden Komponenten einer Windenergieanlage nach einem der Ansprüche 1 bis 8 **dadurch**
**gekennzeichnet, dass**
die Spannelemente (1) mit ihren jeweiligen freien Enden über lösbare Verbindungsmittel an den Befestigungspunkten (2) der Tragstruktur (TS) oder der Rotornabe (RN) befestigt sind.

10. Windenergieanlage, bestehend aus einem Turm und einer um die Längsachse des Turms drehbar auf dem Turmkopf gelagerten Gondel, welche einen Rotor mit einer Rotornabe (RN) sowie eine Tragstruktur (TS) umfasst, wobei die Tragstruktur (TS) und/oder die Rotornabe (RN) Mittel zur Erhöhung der Biegesteifigkeit gemäß einem der Ansprüche 1 bis 9 aufweisen.
